# EUROPEAN PATENT APPLICATION

(11) **EP 4 778 973 A1**
(43) Date of publication of application: **22.07.2026**
(21) Application number: 24895441.4
(22) Date of filing: 17.05.2024
(51) Int. Cl.: C08L 23/12, C08L 23/08, C08L 23/14, H01B 3/44

(54) **POLYPROPYLENE COMPOSITE, AND PREPARATION METHOD THEREFOR AND USE THEREOF**

(30) Priority: 30.11.2023 CN 202311626935
(71) Applicant: Electric Power Research Institute. China Southern Power Grid, Guangzhou, Guangdong 510663 (CN)
(72) Inventor: ZHAN, Yunpeng, Guangzhou, Guangdong 510663 (CN); HOU, Shuai, Guangzhou, Guangdong 510663 (CN); FU, Mingli, Guangzhou, Guangdong 510663 (CN); JIA, Lei, Guangzhou, Guangdong 510663 (CN); HUI, Baojun, Guangzhou, Guangdong 510663 (CN); ZHU, Wenbo, Guangzhou, Guangdong 510663 (CN); FENG, Bin, Guangzhou, Guangdong 510663 (CN); CHEN, Yun, Guangzhou, Guangdong 510663 (CN)
(74) Representative: Hoffmann Eitle
(86) International application number: PCT/CN2024/093959
(87) International publication number: WO 2025/112331

(57) **Abstract**

The present application relates to a polypropylene composite material and a preparation method and use thereof. A polypropylene-based in-reactor alloy resin is used as a matrix and compounded with an ethylene-based elastomer and a propylene-based elastomer, wherein the components are proportioned according to specific parts by weight, through which the polypropylene-based composite material is prepared and obtained. The modified polypropylene-based composite material combines the performance advantages of multiple elastomers which have excellent compatibility with the polypropylene matrix, while maintaining the mechanical toughness, electrical properties, and heat resistance of the polypropylene matrix. The prepared polypropylene composite material not only exhibits good resistance to high and low temperatures, but also possesses excellent mechanical and electrical properties, thereby enhancing the adaptability of the cable insulating layer under harsh conditions, ensuring the stability of polypropylene insulation structures, and demonstrating promising application prospects in the manufacture of high-voltage cables.

## Description

### TECHNICAL FIELD

The present application relates to the technical field of polymer functional materials, and in particular to a polypropylene composite material, and a preparation method and use thereof.

### BACKGROUND

High-voltage cables, serving as the "arteries" and "nerves" of power transmission and distribution systems, play an important role in current and future global energy internet. During operation of high-voltage cables, cable cores generate heat, resulting in elevated temperatures. In addition, for certain regions that are in extremely cold zones, winter temperatures frequently fall below -50 °C. Therefore, improving the reliability of high-voltage cables in both high- and low-temperature environments has become an urgent technical issue to be addressed.

Polypropylene-based thermoplastic insulated high-voltage cables exhibit low production energy consumption and good recyclability, making them more adaptable to meet the future development requirements of power grids. Replacing conventional cross-linked polyethylene insulated thermoplastic high-voltage cables with polypropylene-based thermoplastic insulated high-voltage cables represents a future development direction of the cable industry. Accordingly, in order to overcome performance deficiencies that may arise during actual operation of cables under extreme environmental conditions, there is a need to improve polypropylene cable composite materials, thereby enhancing the mechanical and electrical performance stabilities of polypropylene-based composite materials in high- and low-temperature environments to meet the development demands of power grids.

### SUMMARY

In view of the above, there is a need to provide a polypropylene composite material having excellent high- and low-temperature stabilities, electrical performance stability, and mechanical performance stability, as well as a preparation method and use thereof.

In a first aspect of the present application, a polypropylene composite material is provided, raw materials of which include the following components in parts by weight:
40 parts to 60 parts of a polypropylene-based in-reactor alloy resin;
15 parts to 35 parts of an ethylene-based elastomer; and
15 parts to 35 parts of a propylene-based elastomer.

In an embodiment, the ethylene-based elastomer includes at least one of the following characteristics:
(1) a density of 0.88 g/cm³ to 0.92 g/cm³;
(2) a melt index of 2.2 g/10 min to 2.8 g/10 min under conditions of 230 °C and 2.16 kg.

In an embodiment, the propylene-based elastomer includes at least one of the following characteristics:
(1) a crystallinity of 10% to 15%;
(2) a propylene content greater than 80 wt%;
(3) having isotactic stereoregularity.

In an embodiment, the polypropylene-based in-reactor alloy resin is prepared from raw materials including a polypropylene matrix and an elastomer.

Optionally, the polypropylene matrix includes a polypropylene homopolymer matrix.

Optionally, the elastomer includes one or more of an ethylene-propylene random copolymer or an ethylene-propylene-butene random copolymer.

In an embodiment, a content of the elastomer in the polypropylene-based in-reactor alloy resin is in a range from 20 wt% to 25 wt%.

In an embodiment, the raw materials of the polypropylene composite material further include 0.1 parts to 1.0 parts by weight of an antioxidant.

Optionally, the antioxidant includes antioxidant 1010.

In a second aspect of the present application, a method for preparing the polypropylene composite material as described above is provided, including the following step:

introducing the raw materials and melt blending the raw materials to prepare the polypropylene-based composite material.

In an embodiment, the melt blending satisfies at least one of the following conditions:
(1) a blending temperature of 180 °C to 200 °C;
(2) a blending time of 10 min to 15 min;
(3) a blending rotational speed of 60 r/min to 80 r/min;
(4) the melt blending being carried out by internal mixing, extrusion, or a combination thereof

In a third aspect of the present application, an insulating material is provided, including the polypropylene composite material as described above.

In a fourth aspect of the present application, a high-voltage cable is provided, including the polypropylene composite material as described above or the insulating material as described above.

The present application has the following beneficial effects:
The present application employs the polypropylene-based in-reactor alloy resin as a matrix, which is compounded with the ethylene-based elastomer and the propylene-based elastomer, wherein the components are proportioned according to specific parts by weight, through which a polypropylene-based composite material having excellent high- and low-temperature stabilities, electrical properties, and mechanical properties can be prepared and obtained.

The modified polypropylene-based composite material combines the performance advantages of the ethylene-based elastomer and the propylene-based elastomer, while maintaining the mechanical toughness, electrical properties, and heat resistance of the polypropylene matrix. The ethylene-based elastomer exhibits high toughness and low modulus in low-temperature environments, and can provide octene flexible segments, thereby improving the mechanical toughness of the polypropylene matrix while ensuring retention of mechanical toughness in low-temperature environments. The propylene-based elastomer possesses isotactic stereoregularity and a crystallinity of 10% to 15%, having good interfacial compatibility with the polypropylene matrix, thereby effectively balancing the mechanical toughness and electrical properties of polypropylene insulating material. Moreover, the high-temperature-resistant crystalline structure of the propylene-based elastomer can, to a certain extent, maintain the high-temperature resistance of the polypropylene composite material.

In summary, the present application utilizes multiple elastomers having good compatibility with the polypropylene matrix as modifying materials to balance the mechanical toughness and electrical properties of the polypropylene composite material. As a result, the prepared polypropylene composite material not only exhibits good resistance to high and low temperatures, but also possesses excellent mechanical and electrical properties, thereby enhancing the adaptability of the cable insulating layer under harsh conditions, ensuring the stability of polypropylene insulation structure, and demonstrating promising application prospects in the manufacture of high-voltage cables.

### DETAILED DESCRIPTION

The polypropylene composite material, preparation method thereof, and use thereof of the present application will be further described in detail below with reference to specific embodiments. The present application may be implemented in many different forms and is not limited to the embodiments described herein. Rather, these embodiments are provided to facilitate a more thorough and comprehensive understanding of the present disclosure.

Unless otherwise defined, all technical and scientific terms used herein have the same meanings as commonly understood by a person having ordinary skill in the art to which the present application pertains. The terminology used herein in the specification of the present application is for the purpose of describing specific embodiments only and is not intended to limit the present application.

Unless otherwise specified or unless there is a contradiction in context, the terms or phrases used herein have the following meanings:
As used herein, "one or more" refers to any one, two, or more of the listed items.
As used herein, the terms "and/or", "or/and", "as well as/or", when used in a list of two or more associated items, mean that any one of the items can be selected, and any or all combinations of the items can be selected. The any or all combinations include the combination of any two of the associated listed items, the combination of any more of the associated listed items, or the combination of all associated listed items.
As used herein, terms such as "further", "furthermore", and "particularly" are used for descriptive purposes to indicate differences in content, and should not be construed as limiting the scope of protection of the present application.
As used herein, "first aspect", "second aspect", "third aspect", and the like are used for descriptive purposes only, and shall not be construed as indicating or implying relative importance or quantity, nor as implicitly indicating the importance or number of the indicated technical features. Furthermore, "first", "second", "third", and the like are used merely for non-exhaustive descriptive purposes and shall not be construed as constituting a closed-ended limitation on number. Accordingly, a feature defined as "first" or "second" may explicitly or implicitly include at least one such feature. In the description of the present application, "a plurality of" means at least two, for example, two, three, or more, unless otherwise explicitly and specifically defined. In the description of the present application, "multiple" means at least one, for example, one, two, or more, unless otherwise explicitly and specifically defined.

In the present application, when a numerical range is mentioned, unless otherwise specified, the range is to be understood as continuous and inclusive of the minimum and maximum values of the range, as well as every value between such minimum and maximum values. Further, when a range refers to integers, each integer between the minimum and maximum values of the range is included. In addition, where multiple ranges are provided to describe a feature or characteristic, such ranges may be combined. In other words, unless otherwise indicated, all ranges disclosed herein are intended to include any and all subranges subsumed therein.

Unless otherwise specified, percentage contents referred to herein mean mass percentages for solid-liquid mixtures and solid-solid mixtures, and volume percentages for liquid-liquid mixtures.

Unless otherwise specified, percentage concentrations referred to herein mean final concentrations. The "final concentration" refers to the proportion of the added component in the system after the component has been added.

Unless otherwise specifically defined, temperature parameters referred to herein may involve constant-temperature treatment or treatment within a certain temperature range. In the case of constant-temperature treatment, fluctuations within the precision range of instrument control are permitted, for example, fluctuations within ±5 °C, ±2 °C, ±1 °C, ±0.5 °C, ±0.4 °C, ±0.3 °C, ±0.2 °C, or ±0.1 °C are permitted. As used herein, "room temperature" denotes the absence of applied temperature control, and generally refers to a temperature of 4 °C to 35 °C, preferably 20 ± 5 °C.

In the present application, for technical features described in an open-ended manner, both a closed-ended technical solution consisting of the listed features and an open-ended technical solution including the listed features are encompassed.

At present, the development of polypropylene cables is still at its early stage. Improvements to and enhancements to the performance of polypropylene insulating material are mainly achieved through blending modification, copolymerization modification, graft modification, nano-modification, crystal form regulation, and other approaches. Blending refers to combined mixing of materials and is a physical method in which several materials are uniformly mixed to improve material properties. Through blending, the physical and mechanical properties and processability of polymer materials can be improved, costs can be reduced, and the scope of application can be expanded. Blending is one of the important approaches for achieving polymer modification and for producing high-performance new materials.

Melt blending, also known as blending of melts, refers to a method in which the polymer components required for blending are processed in mixing equipment at temperatures above their viscous flow temperatures to obtain a uniform polymer co-melt, followed by cooling and pelletizing. An advantage of melt blending is that the requirements for particle sizes and uniformities of raw materials are less stringent than those of dry powder blending; therefore, raw material preparation is relatively simple. In the molten state, the mutual diffusion between molecular chains of different polymers is enhanced, and, combined with the strong shear and/or extensional effects of the mixing equipment, the mixing effect is significantly superior to that of dry powder blending.

The polypropylene in-reactor alloy resin is a multiphase polypropylene blend directly produced in reactors through multi-stage reactions. First, propylene is polymerized in a first-stage reactor to obtain polypropylene homopolymer. The polypropylene homopolymer is then transferred to a subsequent reactor, into which ethylene and propylene monomers are simultaneously introduced to perform copolymerization, thereby forming an ethylene-propylene random copolymer within the polypropylene homopolymer. Because the copolymer has a relatively low glass transition temperature, it can be dispersed as a rubber phase within the polypropylene matrix, thereby imparting good low-temperature performance to polypropylene. Polyolefin elastomers have no unsaturated double bonds in their molecular structure and exhibit a narrow molecular weight distribution and has short-chain branches which are uniformly distributed, thereby possessing excellent physical and mechanical properties, such as high elasticity, high strength, and high elongation, as well as excellent low-temperature resistance.

During the experimentation, the inventors of the present application unexpectedly discovered that, by coupling the performance advantages of polyolefin elastomers having different chemical structures-specifically, utilizing the high toughness and low modulus of the ethylene-based elastomer in low-temperature environments and melt blending such an ethylene-based elastomer with the propylene-based elastomer that exhibits resistance to high-temperature deformation - a modified polypropylene-based composite material can be prepared. This approach effectively addresses the difficulty of simultaneously achieving desirable mechanical properties of polypropylene insulating materials in both high- and low-temperature environments, thereby preparing a polypropylene-based composite material having excellent electrical and mechanical performance.

In a first aspect of the present application, a polypropylene composite material is provided, raw materials of which include the following components in parts by weight:
40 parts to 60 parts of a polypropylene-based in-reactor alloy resin;
15 parts to 35 parts of an ethylene-based elastomer; and
15 parts to 35 parts of a propylene-based elastomer.

It can be understood that the proportion of the polypropylene-based in-reactor alloy resin can be, but is not limited to: 40 parts, 41 parts, 42 parts, 43 parts, 44 parts, 45 parts, 46 parts, 47 parts, 48 parts, 49 parts, 50 parts, 51 parts, 52 parts, 53 parts, 54 parts, 55 parts, 56 parts, 57 parts, 58 parts, 59 parts, or 60 parts. The proportion of the ethylene-based elastomer can be, but is not limited to: 15 parts, 16 parts, 17 parts, 18 parts, 19 parts, 20 parts, 21 parts, 22 parts, 23 parts, 24 parts, 25 parts, 26 parts, 27 parts, 28 parts, 29 parts, 30 parts, 31 parts, 32 parts, 33 parts, 34 parts, or 35 parts. The proportion of the propylene-based elastomer can be, but is not limited to: 15 parts, 16 parts, 17 parts, 18 parts, 19 parts, 20 parts, 21 parts, 22 parts, 23 parts, 24 parts, 25 parts, 26 parts, 27 parts, 28 parts, 29 parts, 30 parts, 31 parts, 32 parts, 33 parts, 34 parts, or 35 parts.

In the present application, the polypropylene in-reactor alloy resin is employed as a matrix, and the ethylene-based elastomer and the propylene-based elastomer are composited therewith, fully leveraging the performance advantages of both. The ethylene-based elastomer provides octene flexible segments, thereby improving the mechanical toughness of the polypropylene matrix while ensuring retention of mechanical toughness in low-temperature environments. The propylene-based elastomer possesses isotactic stereoregularity and a crystallinity of 10% to 15%, having good interfacial compatibility with the polypropylene matrix, thereby effectively balancing the mechanical toughness and electrical properties of polypropylene insulating material. The high-temperature-resistant crystalline structure can, to a certain extent, maintain the high-temperature resistance of the polypropylene insulating material. The present application utilizes multiple elastomers as modifying materials, which exhibits excellent compatibility with polypropylene segments, thereby balancing the mechanical toughness and electrical properties of polypropylene insulating material. The polypropylene insulating material exhibits good resistance to high and low temperatures, thereby enhancing the adaptability of the cable insulating layer under harsh conditions, and ensuring stability of the polypropylene insulation structure.

In a specific example, the ethylene-based elastomer has a density of 0.88 g/cm³ to 0.92 g/cm³. It can be understood that the density of the ethylene-based elastomer can be, but is not limited to, 0.88 g/cm³, 0.89 g/cm³, 0.90 g/cm³, 0.91 g/cm³, or 0.92 g/cm³.

In a specific example, under conditions of 230 °C and 2.16 kg, the ethylene-based elastomer has a melt index of 2.2 g/10 min to 2.8 g/10 min. It can be understood that, under conditions of 230 °C and 2.16 kg, the melt index of the ethylene-based elastomer can be, but is not limited to, 2.2 g/10 min, 2.3 g/10 min, 2.4 g/10 min, 2.5 g/10 min, 2.6 g/10 min, 2.7 g/10 min, or 2.8 g/10 min.

It can be understood that the ethylene-based elastomer is a thermoplastic elastomer produced by copolymerization of ethylene and octene catalyzed by a metallocene catalyst.

In a specific example, the propylene-based elastomer has a crystallinity of 10% to 15%. In a specific example, the crystallinity of the propylene-based elastomer can be, but is not limited to, 10%, 11%, 12%, 13%, 14%, or 15%.

In a specific example, the propylene-based elastomer has a propylene content greater than 80 wt%.

In a specific example, the propylene-based elastomer possesses isotactic stereoregularity.

The propylene-based elastomer is produced by using metallocene catalysis technology in combination with a solution polymerization process, and is a unique propyleneethylene semi-crystalline copolymer having distinctive high elasticity, flexibility, and low-temperature impact resistance. In the present application, due to the specific propyleneethylene elastomer, a portion of the crystalline properties of polypropylene is retained even at a high ethylene content.

In a specific example, the raw materials for preparing the polypropylene-based in-reactor alloy resin include a polypropylene matrix and an elastomer.

In a specific example, the polypropylene matrix includes a polypropylene homopolymer matrix.

In a specific example, the elastomer includes one or more of an ethylene-propylene random copolymer or an ethylene-propylene-butene random copolymer.

In a specific example, a content of the elastomer in the polypropylene-based in-reactor alloy resin is in a range from 20 wt% to 25 wt%.

In a specific example, the raw materials for preparing the polypropylene-based in-reactor alloy resin include a polypropylene homopolymer matrix and an ethylene-propylene random copolymer.

In a specific example, a content of the ethylene-propylene random copolymer in the polypropylene-based in-reactor alloy resin is in a range from 20 wt% to 25 wt%.

In a specific example, the raw materials of the polypropylene composite material further include 0.1 parts to 1.0 parts by weight of an antioxidant.

In a specific example, the antioxidant includes antioxidant 1010.

In a second aspect of the present application, a method for preparing the polypropylene composite material as described above is provided, including the following step:
introducing the raw materials and melt blending the raw materials to prepare the polypropylene-based composite material.

In a specific example, in the melt blending process, the blending temperature is in a range from 180 °C to 200 °C. It can be understood that the blending temperature can be, but is not limited to, 180 °C, 181 °C, 182 °C, 183 °C, 184 °C, 185 °C, 186 °C, 187 °C, 188 °C, 189 °C, 190 °C, 191 °C, 192 °C, 193 °C, 194 °C, 195 °C, 196 °C, 197 °C, 198 °C, 199 °C, or 200 °C.

In a specific example, in the melt blending process, the blending time is in a range from 10 min to 15 min. It can be understood that the blending time can be, but is not limited to, 10 min, 11 min, 12 min, 13 min, 14 min, or 15 min.

In a specific example, in the melt blending process, the blending rotational speed is in a range from 60 r/min to 80 r/min. It can be understood that the blending rotational speed can be, but is not limited to, 60 r/min, 61 r/min, 62 r/min, 63 r/min, 64 r/min, 65 r/min, 66 r/min, 67 r/min, 68 r/min, 69 r/min, 70 r/min, 71 r/min, 72 r/min, 73 r/min, 74 r/min, 75 r/min, 76 r/min, 77 r/min, 78 r/min, 79 r/min, or 80 r/min.

In a specific embodiment, in the melt blending process, the blending is carried out by internal mixing, extrusion, or a combination thereof.

In a third aspect of the present application, an insulating material is provided, including the polypropylene composite material as described above.

In a fourth aspect of the present application, a high-voltage cable is provided, including the polypropylene composite material as described above or the insulating material as described above.

In the present application, the in-reactor alloy modification technology is combined with the physical blending modification technology, in which olefin elastomers are used as modifying materials, introducing ethylene-based and propylene-based elastomers in different proportions to address the problem of the difficulty of simultaneously achieving desirable mechanical properties of polypropylene insulating materials in both high- and low-temperature environments. The resulting modified polypropylene-based composite material exhibits excellent high- and low-temperature resistance stability, electrical properties, and mechanical properties, while ensuring the stability of the insulation structure, thus is suitable for application in high-voltage cables and for preparation of cable composite materials and related products.

The present application is further described in detail below with reference to specific examples. For experimental parameters not specified in the following specific examples, priority shall be given to the guidance provided in this application document. Reference may also be made to experimental manuals in the field, other well-known experimental methods in the art, or experimental conditions recommended by manufacturers. It should be understood that the instruments and raw materials used in the following examples are relatively specific and are not limiting in other specific examples.

In Examples 1-5 and Comparative Examples 1-2, the polypropylene in-reactor alloy resin used was prepared by in situ introducing an elastomer into a polypropylene homopolymer matrix within a polymerization reactor, wherein the elastomer was an ethylene-propylene random copolymer with a content of 25 wt%, and the antioxidant used was Antioxidant 100.

### Example 1

50 parts of a polypropylene in-reactor alloy resin, 15 parts of an ethylene-based elastomer having a density of 0.90 g/cm³ and a melt index of 2.5 g/10 min, 35 parts of a propylene-based elastomer having isotactic stereoregularity, a propylene content of 89 wt%, and a crystallinity of 12%, and 0.3 parts of an antioxidant were weighed as raw materials and subjected to melt blending in an internal mixer to obtain a polypropylene-based composite material. The melt blending process was performed at a temperature of 190 °C for 15 min at a rotational speed of 80 r/min.

### Example 2

50 parts of a polypropylene in-reactor alloy resin, 25 parts of an ethylene-based elastomer having a density of 0.90 g/cm³ and a melt index of 2.5 g/10 min, 25 parts of a propylene-based elastomer having isotactic stereoregularity, a propylene content of 89 wt%, and a crystallinity of 12%, and 0.3 parts of an antioxidant were weighed as raw materials and subjected to melt blending in an internal mixer to obtain a polypropylene-based composite material. The melt blending process was performed at a temperature of 190 °C for 15 min at a rotational speed of 80 r/min.

### Example 3

50 parts of a polypropylene in-reactor alloy resin, 35 parts of an ethylene-based elastomer having a density of 0.90 g/cm³ and a melt index of 2.5 g/10 min, 15 parts of a propylene-based elastomer having isotactic stereoregularity, a propylene content of 89 wt%, and a crystallinity of 12%, and 0.3 parts of an antioxidant were weighed as raw materials and subjected to melt blending in an internal mixer to obtain a polypropylene-based composite material. The melt blending process was performed at a temperature of 190 °C for 15 min at a rotational speed of 80 r/min.

### Example 4

60 parts of a polypropylene in-reactor alloy resin, 20 parts of an ethylene-based elastomer having a density of 0.88 g/cm³ and a melt index of 2.2 g/10 min, 20 parts of a propylene-based elastomer having isotactic stereoregularity, a propylene content of 89 wt%, and a crystallinity of 12%, and 0.1 parts of an antioxidant were weighed as raw materials and subjected to melt blending in an internal mixer to obtain a polypropylene-based composite material. The melt blending process was performed at a temperature of 190 °C for 15 min at a rotational speed of 80 r/min.

### Example 5

40 parts of a polypropylene in-reactor alloy resin, 30 parts of an ethylene-based elastomer having a density of 0.92 g/cm³ and a melt index of 2.8 g/10 min, 30 parts of a propylene-based elastomer having isotactic stereoregularity, a propylene content of 89 wt%, and a crystallinity of 12%, and 0.5 parts of an antioxidant were weighed as raw materials and subjected to melt blending in an internal mixer to obtain a polypropylene-based composite material. The melt blending process was performed at a temperature of 190 °C for 15 min at a rotational speed of 80 r/min.

### Comparative Example 1

50 parts of a polypropylene in-reactor alloy resin, 50 parts of a propylene-based elastomer having isotactic stereoregularity, a propylene content of 89 wt%, and a crystallinity of 12%, and 0.5 parts of an antioxidant were weighed as raw materials and subjected to melt blending in an internal mixer to obtain a polypropylene-based composite material. The melt blending process was performed at a temperature of 190 °C for 15 min at a rotational speed of 80 r/min.

### Comparative Example 2

50 parts of a polypropylene in-reactor alloy resin, 50 parts of an ethylene-based elastomer having a density of 0.90 g/cm³ and a melt index of 2.5 g/10 min under conditions of 230 °C and 2.16 kg, and 0.5 parts of an antioxidant were weighed as raw materials and subjected to melt blending in an internal mixer to obtain a polypropylene-based composite material. The melt blending process was performed at a temperature of 190 °C for 15 min at a rotational speed of 80 r/min.

The raw materials (in parts by weight) and the parameters of the melt blending process for Examples 1-5 and Comparative Examples 1-2 are listed in Table 1 below.

**Table 1**

| No. | Polypropylene in-reactor alloy resin | Ethylene-based elastomer | Propylene-based elastomer | Antioxidant | Conditions of melt blending process |
|---|---|---|---|---|---|
| Example 1 | 50 | 15 | 35 | 0.3 | 190°C, 15min, 80r/min |
| Example 2 | 50 | 25 | 25 | 0.3 | 190°C, 15min, 80r/min |
| Example 3 | 50 | 35 | 15 | 0.3 | 190°C, 15min, 80r/min |
| Example 4 | 60 | 20 | 20 | 0.1 | 190°C, 15min, 80r/min |
| Example 5 | 40 | 30 | 30 | 0.5 | 190°C, 15min, 80r/min |
| Comparative Example 1 | 50 | / | 50 | / | 190°C, 15min, 80r/min |
| Comparative Example 2 | 50 | 50 | / | / | 190°C, 15min, 80r/min |

The polypropylene composite materials prepared in Examples 1-5 and Comparative Examples 1-2 were characterized and tested for room-temperature flexural modulus, electrical properties, crystal structure, heat resistance, and the temperature dependence of storage modulus. The test results are shown in Table 2 below.

The test methods or standards are as follows:
(1) Flexural modulus: Tested in accordance with GB/T 9341-2008.
(2) Electrical properties: The breakdown field strength was tested in accordance with GB/T 1408.1-2016.
(3) Crystal structure: Measured using a differential scanning calorimeter (TA Q250). Approximately 5 mg of the sample was placed in a sealed crucible and heated from room temperature to 200 °C at a heating rate of 10 °C/min under a nitrogen atmosphere. The variation of heat flow signal with temperature was recorded.
(4) Heat resistance test: To evaluate whether the insulating material can maintain the necessary mechanical strength at the expected overload temperature, specimens were prepared according to the tensile property test method. The standard method for the thermal elongation test was adopted. One end of the specimen was suspended in an oven set at a temperature of 150 °C, and the other end of the specimen was subjected to a load equivalent to a tensile force of 0.2 MPa based on the cross-section of the specimen. After a set time of 15 minutes, the elongation of the specimen was measured and defined as the elongation under load. The elongation measured after cooling was defined as the permanent deformation rate.
(5) Temperature dependence of storage modulus: To evaluate the low-temperature resistance of the polypropylene composite material, the storage modulus at 0 °C of the polypropylene composite material samples of Examples 1-5 and Comparative Examples 1-2 was characterized using a dynamic mechanical analyzer (TQ850) in tensile mode. The oscillatory mode was adopted with a frequency of 1 Hz and an amplitude of 15 µm.

**Table 2**

| No. | Room-temperature flexural modulus (MPa) | Storage modulus at 0°C (MPa) | Breakdown field strength (MV/m) | Melting temperature (°C) | Elongation under load (%) | Permanent deformation rate (%) |
|---|---|---|---|---|---|---|
| Example 1 | 185.2 | 563.8 | 29.1 | 164.6 | 0.20 | 0.15 |
| Example 2 | 180.1 | 526.1 | 28.3 | 166.2 | 0.85 | 0.20 |
| Example 3 | 171.3 | 487.9 | 27.9 | 164.9 | 5.70 | 2.80 |
| Example 4 | 254.8 | 592.7 | 32.1 | 166.5 | 0.03 | 0.03 |
| Example 5 | 112.8 | 416.3 | 25.4 | 164.8 | 8.62 | 5.48 |
| Comparative Example1 | 205.6 | 625.3 | 30.1 | 165.2 | 0.10 | 0.05 |
| Comparative Example2 | 163.9 | 450.3 | 26.9 | 165.8 | 20.1 | 15.4 |

As shown in Table 2, the polypropylene composite material prepared in Comparative Example 1 exhibits lower room-temperature storage modulus, good heat resistance, and appropriate breakdown field strength, but its storage modulus at low temperature reaches up to 625.3 MPa, presenting a certain risk for use in cold regions. In contrast, the polypropylene composite material prepared in Comparative Example 2 exhibits relatively good mechanical toughness, with a low storage modulus even under low-temperature condition; however, this composite material exhibits larger deformation under load and poor heat resistance, making it difficult to meet the use requirements.

In the present application, by employing the polypropylene in-reactor alloy resin and combining the performance advantages of the ethylene-based and propylene-based elastomers, the mechanical toughness, electrical properties, and heat resistance of polypropylene insulating material are balanced. The polypropylene composite material prepared in each of Examples 1-5 has a high melting temperature and a relatively stable polypropylene crystal framework, ensuring that the material has good dimensional stability at high temperatures and exhibits excellent heat resistance. The propylene-based elastomer has good interfacial compatibility with the polypropylene matrix, improving the toughness of the material while ensuring that the material has high breakdown filed strength and electrical stability. Additionally, the polypropylene insulating material includes multiple elastomers, combining their advantages, thereby exhibiting appropriate room-temperature flexural modulus and good low-temperature storage modulus, and ensuring a wider operational temperature range and better environmental adaptability for the insulating material.

In summary, the present application utilizes multiple elastomers having good compatibility with the polypropylene segments as modifying materials to balance the mechanical toughness and electrical properties of the polypropylene composite material. As a result, the prepared polypropylene composite material not only exhibits good resistance to high and low temperatures, but also possesses excellent mechanical and electrical properties, which enhances the adaptability of the cable insulating layer under harsh conditions, and ensures the stability of polypropylene insulation structures, further demonstrating that the polypropylene composite material provided in the present application has promising application prospects in the manufacture of high-voltage cables and related products.

The technical features of the above-mentioned embodiments can be combined arbitrarily. In order to make the description concise, not all possible combinations of the technical features of the above-mentioned embodiments are described. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A polypropylene composite material, raw materials of which comprising following components in parts by weight:
40 parts to 60 parts of a polypropylene-based in-reactor alloy resin;
15 parts to 35 parts of an ethylene-based elastomer; and
15 parts to 35 parts of a propylene-based elastomer.

2. The polypropylene composite material according to claim 1, wherein the ethylene-based elastomer comprises at least one of following characteristics:
(1) a density of 0.88 g/cm³ to 0.92 g/cm³;
(2) a melt index of 2.2 g/10 min to 2.8 g/10 min under conditions of 230 °C and 2.16 kg.

3. The polypropylene composite material according to claim 1, wherein the propylene-based elastomer comprises at least one of following characteristics:
(1) a crystallinity of 10% to 15%;
(2) a propylene content greater than 80 wt%;
(3) having isotactic stereoregularity.

4. The polypropylene composite material according to claim 1, wherein the polypropylene-based in-reactor alloy resin is prepared from raw materials comprising a polypropylene matrix and an elastomer;
optionally, the polypropylene matrix comprises a polypropylene homopolymer matrix.
optionally, the elastomer comprises one or more of an ethylene-propylene random copolymer or an ethylene-propylene-butene random copolymer.

5. The polypropylene composite material according to claim 4, wherein a content of the elastomer in the polypropylene-based in-reactor alloy resin is in a range from 20 wt% to 25 wt%.

6. The polypropylene composite material according to any one of claims 1 to 5, wherein the raw materials of the polypropylene composite material further comprise 0.1 parts to 1.0 parts by weight of an antioxidant;
optionally, the antioxidant comprises antioxidant 1010.

7. A method for preparing the polypropylene composite material according to any one of claims 1 to 5, comprising a following step:
introducing the raw materials and melt blending the raw materials to prepare the polypropylene-based composite material.

8. The method according to claim 7, wherein the melt blending satisfies at least one of following conditions:
(1) a blending temperature of 180 °C to 200 °C;
(2) a blending time of 10 min to 15 min;
(3) a blending rotational speed of 60 r/min to 80 r/min;
(4) the melt blending being carried out by internal mixing, extrusion, or a combination thereof.

9. An insulating material comprising the polypropylene composite material according to any one of claims 1 to 6.

10. A high-voltage cable comprising the polypropylene composite material according to any one of claims 1 to 6 or the insulating material according to claim 9.
